# EUROPEAN PATENT SPECIFICATION

(11) **EP 2 868 368 B1**
(45) Date of publication and mention of the grant of the patent: **28.08.2019**
(21) Application number: 14188888.3
(22) Date of filing: 14.10.2014
(51) Int. Cl.: B01F 3/04, B01F 5/06, C02F 3/20

(54) **An aerator**
Belüftungsvorrichtung
Aérateur

(30) Priority: 14.10.2013 IE 20130315
(43) Date of publication of application: 06.05.2015
(73) Proprietor: Advanced Enviro Technology Limited, County Limerick (IE)
(72) Inventor: Harnett, Michael, County Limerick (IE); Curtin, Patrick, County Limerick (IE)
(74) Representative: Gorman, Francis Fergus

(56) References cited:
- KR-B1- 100 801 851
- KR-B1- 100 864 688
- US-A- 2 082 759
- US-A- 2 295 391
- US-A- 4 259 267
- US-A- 4 437 765

## Description

### Introduction

This invention relates to an aerator. In particular, the present invention is directed towards an aerator for use in effluent storage tanks and bodies of water where contamination may build up.

Contamination in effluent storage tanks and bodies of water may cause the water environment to degrade to a point where an anaerobic environment is created. Normally, oxygen in the atmosphere is transferred into the body of water, and, the bacteria in the water uses the oxygen to break down organic matter which is contaminating the body of water. However, in cases where the transfer of oxygen from the atmosphere into the body of water is too slow, the environment in the body of water can become an anaerobic environment as opposed to an aerobic environment, which is preferable.

A solution to this problem is to artificially create an increase in the transfer of oxygen into the body of water.

A number of solutions are available on the market, all of which are directed towards increasing the amount of oxygen which is introduced into the body of water. The most dominant solution is known as a compressor system. In a compressor system, compressed air is fed through a network of pipes arranged adjacent to a bottom of the body of water. At a plurality of locations along the network of pipes, diffusers are installed and these allow the compressed air to escape from the network of pipes, at a position adjacent the bottom, into the body of water. The compressed air escapes in the form of bubbles.

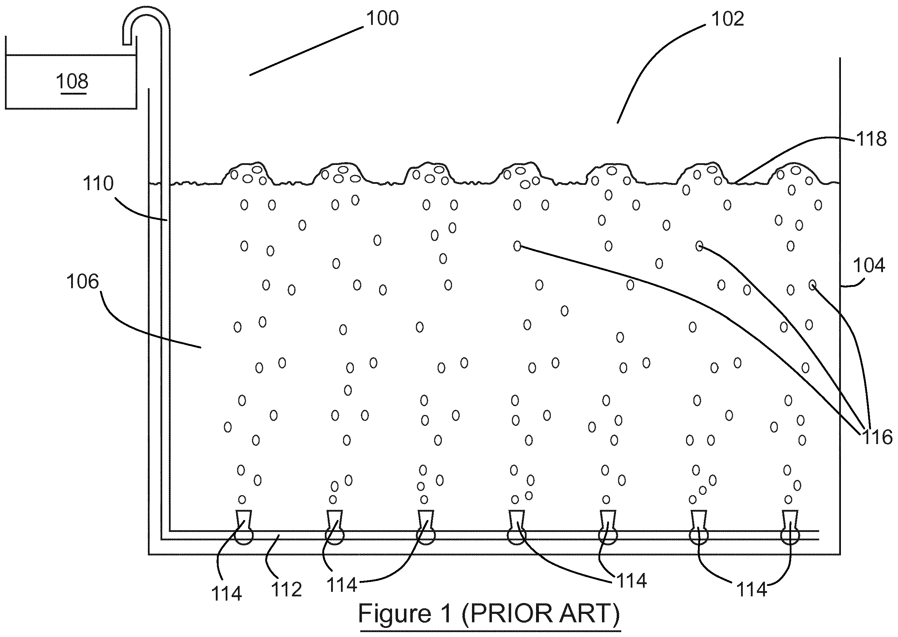

A compressor aerator, as is known from the prior art, is shown in Figure 1. The compressor system is indicated generally by reference numeral 100. A body of water indicated generally by reference numeral 102 is held within an effluent storage tank 104, for example. The body of water 102 comprises submerged water 106 having a water surface 118. The compressor system 100 comprises a compressor 108, and, a network of pipes 110, 112. A plurality of diffusers 114 are arranged along the network of pipes 112 which are adjacent the bottom of the tank 104. The bubbles 116 produced by the compressor system 100, which are commonly referred to as compression bubbles, are released into the submerged water 106 and rise through the submerged water 106 in the body of water 102 until they bubble to the surface 118 of the body of water 102.

The compression bubbles 116 are generally heated due to the process used in the compressor 108 and the bubbles 116 have a tendency to be relatively large and thus are quite buoyant. As a consequence these buoyant compression bubbles 116 will rise through the submerged water 106 to the surface 118 relatively quickly and the bacteria within the body of water 102 only has a very short period to use the oxygen within the compression bubbles 116 to break down the organic matter which is causing contamination within the body of water 102. In short, the compression bubbles 118 tend to agitate rather than aerate the body of water 102 as the compression bubbles do not spend much time with the submerged water 106.

Therefore, although compression systems 100 are quite popular, there are a number of issues surrounding the efficiency of the oxygen transfer within these compression systems 100 and also the compression systems 100 suffer from relatively high running costs. These issues are seen as disadvantages to these compression systems 100.

An alternative solution uses a natural chimney draught aeration system. A natural draught is created to introduce an increased amount of oxygen into the body of water. However large initial installation costs and space requirements for the necessary equipment prohibit the use of such systems in many instances.

It is also known to manually introduce aerobic bacteria into the body of water at predetermined intervals, so as to artificially increase the amount of oxygen in the body of water. However this is a manually intensive process and there are on-going operational costs involved with the procurement of the aerobic bacteria.

U.S. Patent Specification No. 4,437,765 of Seeger discloses a vertical axis dispersion turbine for mixing a liquid in a container, comprising a vertical stator tube which extends downwardly into the liquid, and terminates in a cylindrical guide ring. The guide ring defines a chamber having an upper upwardly facing annular inlet and a lower downwardly facing outlet. An impeller is located in the chamber between upper and lower dispersion elements for urging liquid through the chamber from the annular inlet to the outlet. The dispersion elements, one of which is located above the impeller and the other of which is located below the impeller, comprise respective plates, which may be provided as perforated plates.

U.S. Patent Specification No. 4,259,267 of Wang discloses an aeration apparatus for aerating liquid in a tank comprises a flow confining barrel which extends downwardly into the liquid. A plurality of vertical tubes are located within and adjacent the top of the flow confining barrel. An impeller located beneath the vertical tubes draws surface liquid through the vertical tubes and induces a vortex action in each tube which entrains air in the liquid. The aerated liquid is discharged back into the tank through an annular outlet at the bottom of the flow confining barrel.

U.S. Patent Specification No. 2,082,759 of Walker discloses an apparatus for aerating liquid sewage in an aeration tank. The aerator comprises an elongated tubular housing which extends downwardly into the tank from an upper conical housing. A system of weirs is formed in the upper conical housing, and an impeller located in the tubular housing below the conical housing draws surface liquid sewage through the weir system where air is entrained in the liquid sewage, and the aerated sewage is discharged back into the tank from the lower end of the tubular housing adjacent the bottom of the sewage tank.

U.S. Patent Specification No. 2,295,391 of Durdin discloses an aerator for treating liquid sewage in a sewage tank which comprises an elongated tubular member extending downwardly into the tank from an upper housing. A weir system is located in the upper housing, and surface liquid sewage is drawn by an impeller into the upper housing, air is entrained in the liquid sewage by the weir system, and the aerated liquid sewage is discharged back into the sewage tank from the lower end of the tubular member adjacent the bottom of the sewage tank.

It is a goal of the present invention to provide an apparatus that overcomes at least one of the above mentioned problems. In particular, the expensive excavation and installation costs associated with the foregoing prior art solutions should be minimised, or obviated entirely if possible. Furthermore, it is also desired to improve the efficiency of the transfer of oxygen from bubbles introduced into the body of water, using the aerator of the present invention.

### Summary of the Invention

The present invention is directed towards an aerator comprising a main body casing, a motor, an aerator shaft, a diffuser assembly, and an impeller connected to the aerator shaft, whereby
the main body casing forms a substantially vertical channel and comprises one or more upper openings and a lower open end,
the diffuser assembly is located within the vertical channel,
the impeller is mounted beneath the diffuser assembly,
the motor is configured to rotate the aerator shaft and the impeller to draw a downward draught through the vertical channel in the main body casing, so that air drawn through the aerator by the downward draught is passed through the diffuser assembly to form elongated bubbles having a relatively low pressure due to cavitation, and the impeller is configured to cut the elongated bubbles into micro-bubbles, and to discharge the micro-bubbles through the lower open end of the main body casing, wherein
the diffuser assembly comprises a diffuser material arranged above a diffuser support plate, and the diffuser material has a porosity in the range of 150 to 300 microns.

The advantage of providing the aerator with this structure is that the bubbles formed by the aerator comprise a relatively low pressure and will remain submerged in a body of water being treated for a longer period of time. Thus, the bacteria can avail of the oxygen in the cavitation-formed micro-bubbles for a longer period of time, and therefore be more effective in treating the body of water with the contamination. In a further embodiment the aerator comprises a floatation device securing plate configured to secure the aerator to a floatation device for deployment on a surface of a body of water, such that the motor of the aerator is maintained in a position above the surface of the water, and at least a portion of the main body casing, including the open end of the main body casing, is submerged in the body of water.

The installation of the aerator of the present invention does not require any excavation or other expensive installation costs and as such is seen to be extremely cost effective from an installation point of view.

In a further embodiment three sets of draught holes in the diffuser support plate are configured to form a downward draught, to draw a circular vortex of air through the diffuser material so that an elongated bubble is created.

In a preferred embodiment, the aerator is substantially cylindrical in shape, whereby the main body casing is a tube having a substantially annular traverse cross-section.

In a further embodiment, the diffuser material is one of high density polyethylene, such as that sold under the REGISTERED TRADE MARK Vyon; ground plastic; or, crushed quartz crystal.

In another embodiment, the diffuser plate comprises a diameter in the range of 180mm to 220mm, and is preferably 200mm.

In another embodiment, the diffuser plate comprises a thickness in the range of 1mm to 5mm, and is preferably 3mm.

In a further embodiment, the diffuser material is disc-shaped comprising an upper substantially planar face and a lower substantially planar face; with the disc-shaped diffuser material comprising a central through hole to accommodate an aerator shaft.

In another embodiment, the disc-shaped diffuser material comprises a diameter in the range of 180mm to 220mm, and is preferably 200mm.

In another embodiment of the invention, the disc-shaped diffuser material comprises a thickness in the range of 10mm to 40mm, and is preferably 20mm.

In a further embodiment, the main body casing and/or the floatation device securing plate is made of stainless steel.

In a further embodiment, the main body casing and/or the floatation device securing plate is made of a plastics material.

In another embodiment, the impeller is a three-lobed impeller. In yet a further embodiment, the impeller comprises a diameter in the range of 180mm to 200mm, and is preferably 190mm.

In a further embodiment the motor comprises a motor shaft depending downwardly from the motor into the main body casing of the aerator; and the aerator shaft comprises a bull-nosed upper free end in frictional abutment with a lower free end of the motor shaft such that on rotation of the motor shaft the aerator shaft rotates.

In another embodiment the bull-nosed upper free end of the aerator shaft and/or the lower free end of the motor shaft are rubberised to increase the frictional grip between the bull-nosed upper free end of the aerator shaft and the lower free end of the motor shaft.

In a further embodiment, bearings for the aerator shaft comprise tungsten carbide.

### Detailed Description of Embodiments

The invention will be more clearly understood from the following description of some embodiments thereof, given by way of example only, with reference to the accompanying drawings, in which:
Figure 1 is a diagrammatic view of an aerator in accordance with the prior art;
Figure 2 is a diagrammatic view of an aerator in accordance with the present invention;
Figure 3 is a perspective view of the aerator of Figure 2;
Figure 4 is a side elevation view of the aerator of Figure 2;
Figure 5 is a cross-sectional side elevation view of the aerator of Figure 2;
Figure 6 is a detail cross-sectional view of a shaft connection within the aerator of Figure 2;
Figure 7 is a diagrammatic cross-sectional view of a portion of the aerator of Figure 2;
Figure 8 is a plan elevation view of a diffuser support plate used in the aerator of Figure 2;
Figure 9a is a diagrammatic side view of a blade used on an impeller within the aerator of Figure 2;
Figure 9b is a plan elevation view of the impeller used in the aerator of Figure 2;
Figure 10 is a diagrammatic cross-sectional view of a portion of a further embodiment of an aerator in accordance with the present invention;
Figure 11 is a diagrammatic cross-sectional view of a portion of the further embodiment of the aerator of Figure 10;
Figure 12 is a diagrammatic detail cross-sectional view of a diffuser hole in a diffuser plate of the further embodiment of the aerator of Figure 10; and,
Figure 13 is a diagrammatic cross-sectional view of a shaft termination mount of the further embodiment of the aerator of Figure 10.

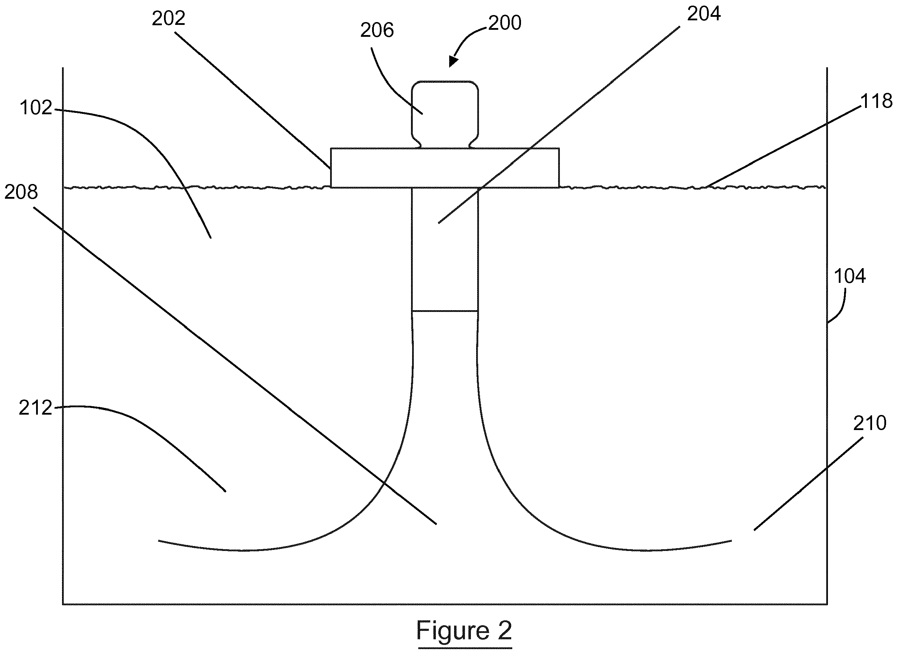

Referring to Figure 2, there is provided an aerator indicated generally by reference numeral 200. The aerator 200 comprises a main body casing 204 arranged beneath a motor 206. The aerator 200 is connected to a flotation device 202 in order to keep the aerator 200 floating on the surface 118 of the body of water 102 in the tank 104.

The aerator 200 of the present invention operates by drawing air from the atmosphere into the aerator 200 above the surface 118 of the body of water 102. The air drawn into the aerator 200 passes downwardly along a substantially vertical channel towards a diffuser assembly (not shown). The diffuser assembly comprises a porous diffuser material which is arranged above a diffuser support plate, which diffuser support plate comprises a number of through holes. The diffuser assembly causes elongated air bubbles to be formed from air passing through the diffuser assembly. Moreover, the diffuser assembly, causes the elongated bubbles to have relatively low pressures due to the cavitation process; and, due to the downward draught created within the aerator 200, these elongated, so-called vacuum bubbles are drawn further down through the substantially vertical channel into the path of a rotating impeller (not shown) whereby the blades of the impeller are specifically designed to cut the elongated bubbles into smaller micro-bubbles.

Whilst floating on the surface 118 of the body of water 102, a lowermost portion of the aerator 200 should be immersed to a minimum depth of 155mm below the surface 118 of the body of water 102, and, up to a maximum depth of 350mm below the surface 118 of the body of water 102. This vertical position of the outlet of the substantially vertical channel of the aerator 200 is important as the position impacts the efficiency of the aerator 200. If the aerator 200 sits too deep in the body of water 102, the aerator 200 loses efficiency because it has to vacate water from the substantially vertical channel before it can pull the air down through the substantially vertical channel. Cavitation cannot therefore take place efficiently, affecting the amount of oxygen dispersed into the body of water 102 via the micro-bubbles. If the aerator 200 sits too shallow within the body of water 102, then the throughput of air into the diffuser support plate is diminished, consequently affecting the amount of oxygen dispersed into the body of water 102 via the micro-bubbles.

The types of materials used in the diffuser support plate, and the porosity of these materials, result in vacuum bubbles being created, whereby the pressure within the vacuum bubbles is substantially lower than normal bubbles known from the prior art. The bubble creation process begins when the cavitation forces the air into the porous diffuser material, which creates micro-elongated bubbles as the air passes through the diffuser material. The diffuser materials are compressed to porosity levels ranging from 150 to 300 microns. The manufacture process by which the diffuser materials are ground gives the diffuser material its level of porosity. The manufacture process comprises steps of firstly grinding the material, then compressing the ground material, heating the compressed ground material and bonding the heated compressed ground material to a level that remains porous. The bubbles are then caught in the draught created by a 20° angle on the impeller. The draught has two purposes. It pulls the elongated bubble into the rotating edge of the impeller, chopping it into the micro-bubble as it passes through. The micro-bubbles are then dispersed in a downward motion, mushrooming into a final mist as a result of the draught from the impeller. As a consequence, these vacuum bubbles are less buoyant and do not rise through the submerged water to the surface 118 as quickly as the normal bubbles created using prior art solutions. Furthermore, because the vacuum bubbles are cut into micro-bubbles by the impeller, they stay submerged far longer due to the weight of the body of water on them; and, these micro-bubbles allow the bacteria in the body of water 102 to use the oxygen in the micro-bubbles to break down the organic matter in the body of water 102 in a more effective manner.

As can be seen in Figure 2, the micro-bubbles emerge directly beneath the aerator 200 in a downward flow path 208 before dispersing to other areas 210, 212 adjacent the downward flow path 208. The micro-bubbles are of the order of 0.2mm or less in diameter and will tend to stay submerged for extended periods of time. The micro-bubbles stay in the body of water 102 for a period of time, up to 4 minutes. Substantially full oxygen transfer into the body of water 102 occurs during this period of time, after which the redundant micro-bubble rises to the surface 118. The diffuser assembly can be altered to give different types and sizes of micro-bubbles by altering the diffuser material 213 used such that different porosities are used, and/or by changing the diffuser support plate 214 such that different sized sectioning holes are used.

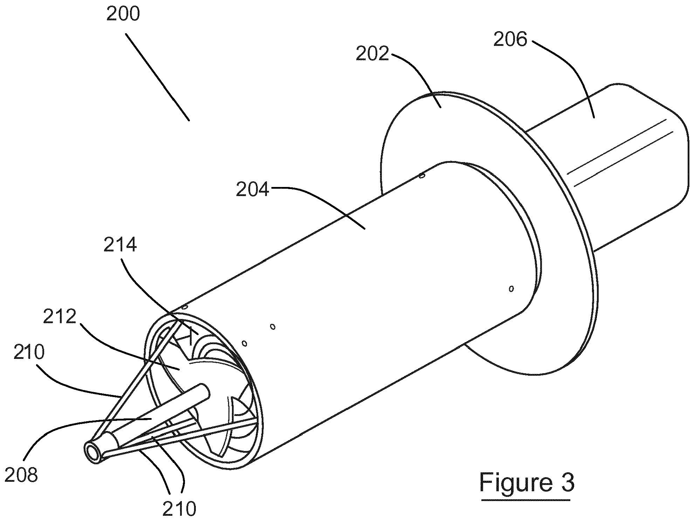

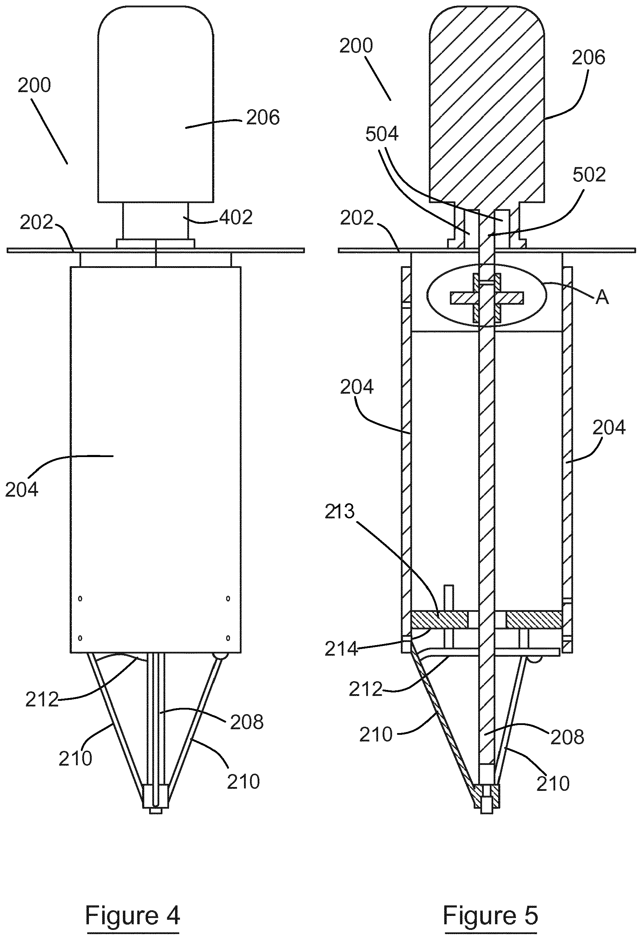

Referring now to Figures 3 to 5 inclusive, the aerator 200 can be seen in greater detail. The motor 206 is connected above an air inlet indicated generally by reference numeral 402 in Figure 4, with the inlets 504 shown in Figure 5. A flotation device securing plate 202 is provided intermediate the motor 206 and the main body casing 204. At a lowermost end of the main body casing 204, three downwardly depending support arms 210 connect at a shaft termination mounting point. The three downwardly depending support arms 210 are connected at an upper free end to the main body casing 204, and, come together at their lower free ends to a hold a shaft termination mount (not shown). The shaft termination mount may preferably be made of tungsten carbide for robustness. The aerator shaft 208 is held in a substantially vertical orientation and is held in abutment against a motor shaft 502.

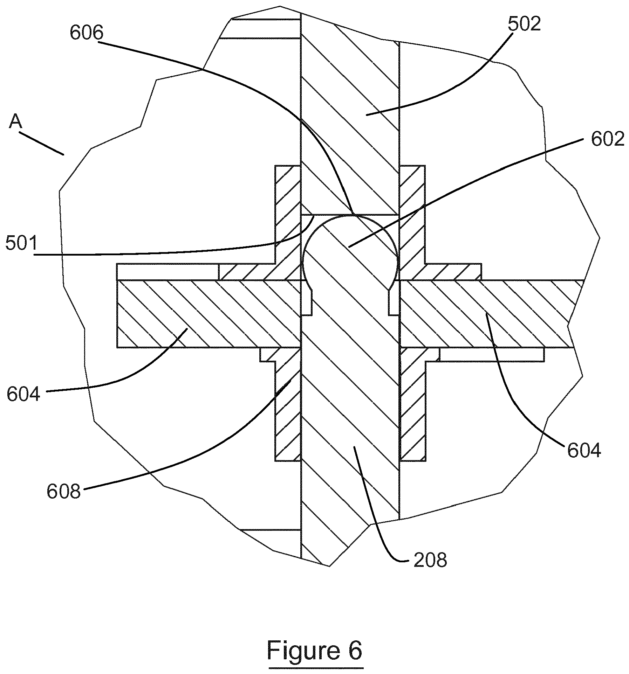

Referring now to Figure 6, the aerator shaft 208 comprises a bull-nosed upper end 602, and an uppermost point 606 of the bull-nosed upper end 602 is held in frictional abutment with a lowermost free end 501 of the motor shaft 502 such that the rotation of the motor shaft 502 is transferred to the aerator shaft 208 and causes the aerator shaft 208 to rotate. The uppermost point 606 of the bull-nosed upper end 602 may be rubberised to improve frictional grip and/or the lowermost free end 501 of the motor shaft 502 may be rubberised to improve frictional grip to eliminate vibration. Coupling flanges 608 are used to hold the mechanism in place. Floats 604, connected to the aerator shaft 208 are used to urge the motor shaft 502 and the aerator shaft 208 together. This mechanism has the advantage of acting as a shock absorber between the motor shaft 502 and the aerator shaft 208. As the aerator 200 will be subjected to movement when floating on top of the body of water, the flexibility of movement between the motor shaft 502 and the aerator shaft 208 afforded by this frictional abutment arrangement will ensure that the mechanism does not fail due to self-excited over-vibration of the aerator 200.

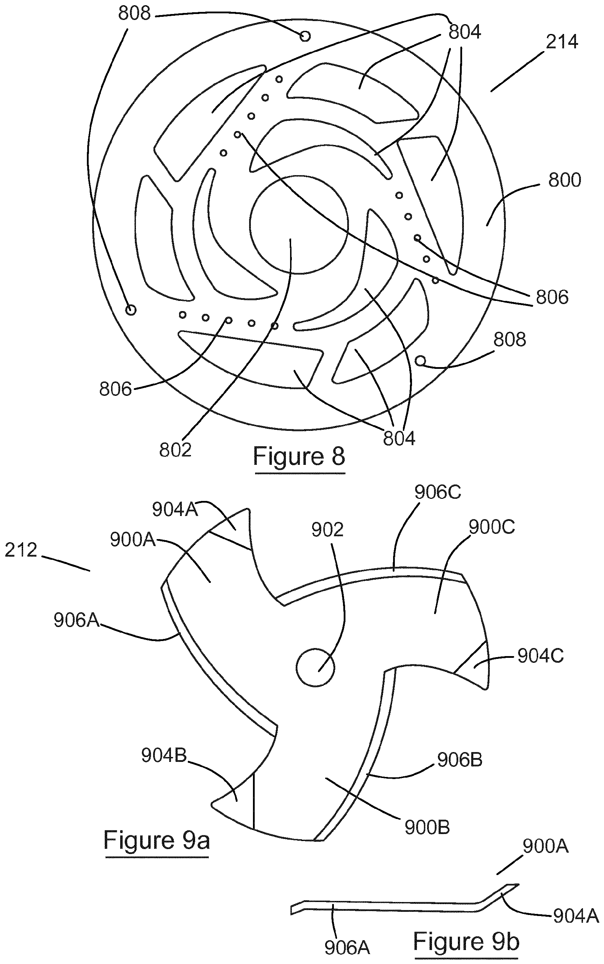

Returning now to Figures 3 to 5 inclusive, the aerator 200 mounts a diffuser assembly comprising a diffuser material 213 above a diffuser support plate 214 within the substantially vertical channel of the aerator 200. The diffuser material 213 is porous and allows air to be drawn through it due to a downward draught created within the channel by the impeller 212 mounted beneath the diffuser assembly. The diffuser material 213 and the diffuser support plate 214 create vacuum bubbles due to cavitation. The diffuser support plate 214 is shown in Figure 8, whereby the diffuser support plate 214 comprises a central through hole 802 to allow the aerator shaft 208 to pass through the diffuser support plate 214. Mounting holes 808 are provided on the diffuser support plate 214 around an outer rim 800. Intermediate the outer rim 800 and the central through hole 802, there is provided a plurality of sectioning holes 804 to create the elongated bubbles and draught holes 806 to assist with creating the downward draught within the substantially vertical channel of the aerator 200. The diffuser material 213 and the diffuser support plate 214 are integral to the present invention as the process which does place as air is drawn through the diffuser assembly results in the low-pressure, so-called vacuum bubbles.

Returning again to Figures 3 to 5 inclusive, the impeller 212 is mounted on the aerator shaft 208. The impeller 212 causes the downward draught to be created in addition to cutting the elongated vacuum bubbles, which discharge from the diffuser assembly, into micro-bubbles. In Figures 9a and 9b, the impeller 212 is a three lobe impeller, although it will be appreciated that various different impellers and means for creating a draught through the vertical channel may be used instead. The three lobe impeller 212 comprises a central through hole 902 for mounting the impeller 212 to the aerator shaft 208. Each lobe 900A, 900B, 900C comprises a main lobe body having a leading edge blade 906A, 906B, 906C respectively and a trailing edge angled tail 904A, 904B, 904C respectively. The leading edge blade 906A, 906B, 906C is useful for cutting the elongated bubbles, and the trailing edge angled tail 904A, 904B, 904C causes the down draught to be created.

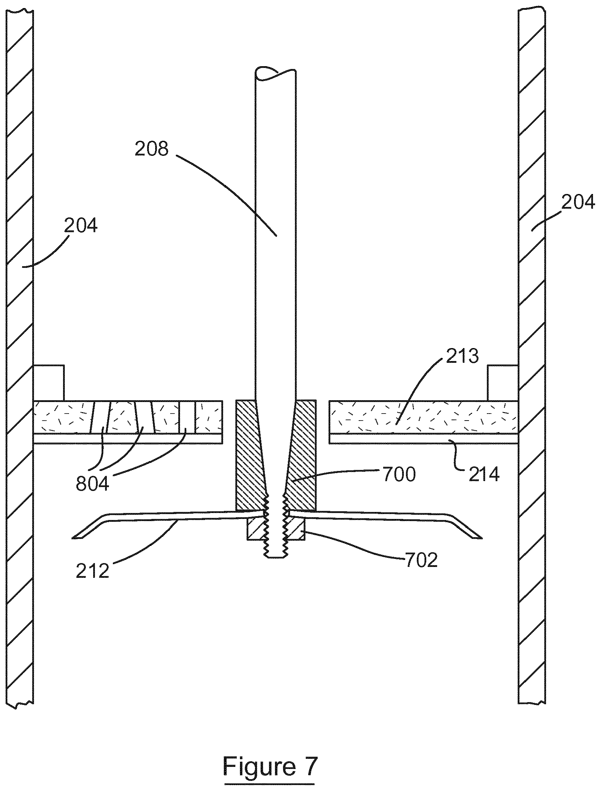

With reference to Figure 7, a portion of the diffuser assembly and the impeller 212 are shown. As can be seen, a taper locking means 700, comprising a 2° taper is used to lock the impeller 212 to the aerator shaft 208. A ceramic brushing 702 is arranged around the impeller 212, and this ceramic brushing 702 centralises and stabilises the impeller 212. The ceramic brushing 702 is kept cool by passing effluent and/or passing water from the body of water.

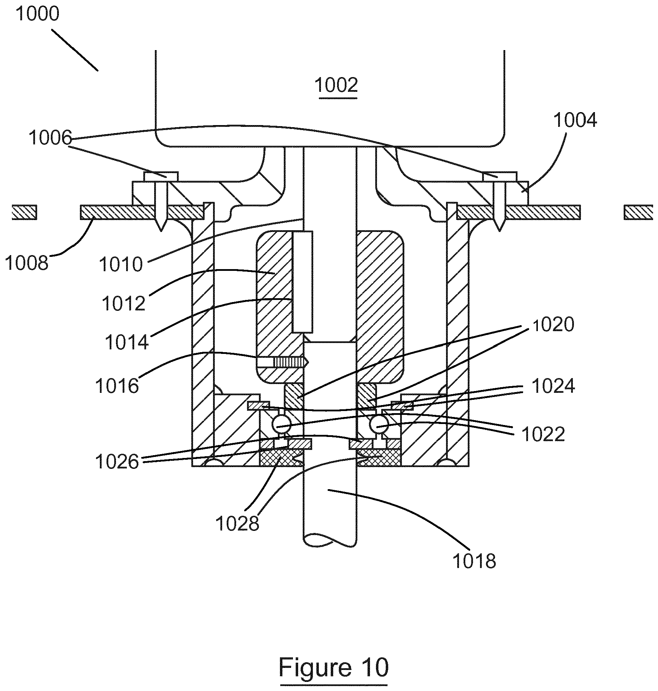

Referring now to Figure 10, wherein like parts previously described have been accorded the same reference numerals, there is provided an aerator 1000 comprising a motor 1002 which is connected to a floatation device 1008 via a motor mounting plate 1004 and bolts 1006. The motor shaft 1010 is keyed with a shaft coupler 1012 by way of a keyway 1014. The shaft coupler 1012 connects to the aerator shaft 1018 by way of a screw 1016. In such a manner the rotational movement of the motor shaft 1010 is transferred to the aerator shaft 1018. Spacing rings 1020 maintain a gap between the shaft coupler 1012 and the bearing assembly 1022. Upper and lower circlips 1024, 1026 locate the bearing assembly 1022. A double lip seal 1028 is provided to mitigate against fluid ingress towards the bearing assembly 1024 when the aerator device 1000 is in use in water, or other such fluids.

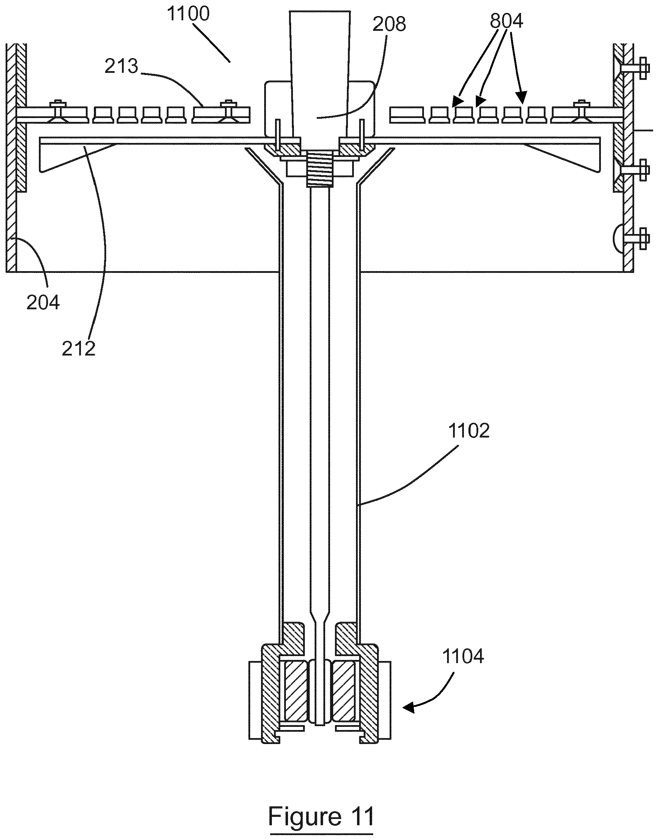

With reference to Figure 11, wherein like parts previously described have been accorded the same reference numerals, there is provided a diffuser section indicated generally by reference numeral 1100 and comprising a diffuser material 213 supported by a diffuser plate (not shown). The diffuser material 213 comprises a plurality of sectioning holes 804 which create the elongated bubbles (not shown). The impeller 212 will cut and break up these elongated bubbles into micro bubbles as described hereinbefore, for discharge through a lower portion of the casing 204. A aerator shaft shield 1102 may be provided intermediate the diffuser assembly 1100 and the shaft termination mount assembly indicated generally by reference numeral 1104.

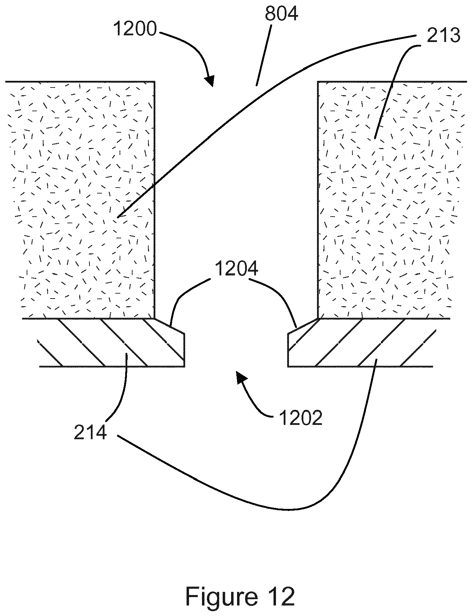

Referring now to Figure 12, wherein like parts previously described have been accorded the same reference numerals, there is provided a detail of a sectioning hole 804 within the diffuser material 213, the sectioning hole 804 comprising an inlet 1200 and an outlet 1202. The outlet 1202 being smaller, in transverse cross-sectional area, than the inlet 1200. For example, the inlet 1200 may have a 4mm diameter, whereas the outl1202 may have a 3mm diameter. A tapered wall section 1204 transitions the sectioning hole 804 from the inlet 1200 towards the outlet 1202.

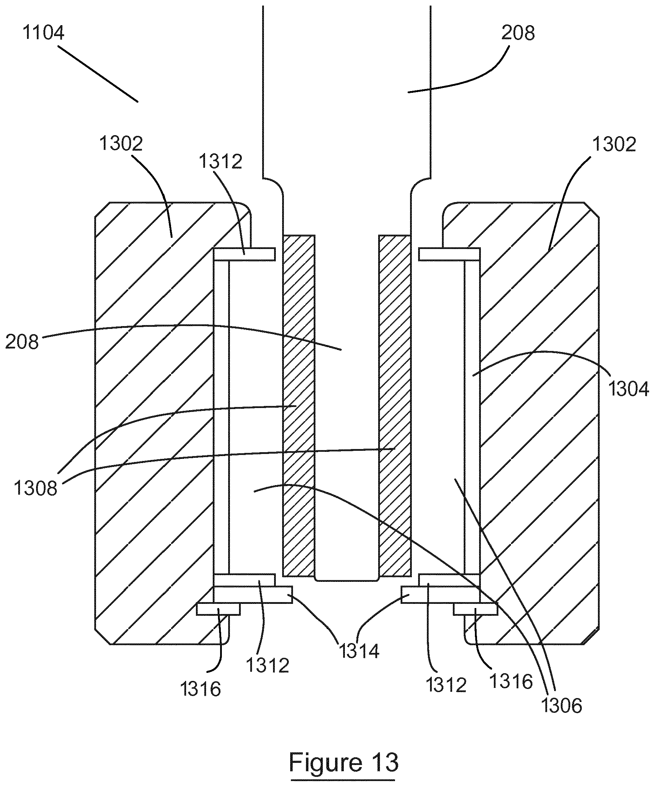

Referencing Figure 13, wherein like parts previously described have been accorded the same reference numerals, there is provided an aerator shaft termination mount assembly indicated generally by reference numeral 1104. A bushing housing 1302, which may preferably be stainless, conceals a rubber sleeve 1304, terminated by a pair of rubber washers 1312. A ceramic bush 1306 is held within the rubber sleeve 1304. A tungsten bush 1308 abuts the ceramic bush 1306, and the free end of the aerator shaft 208 is fixed adjacent the tungsten bush 1308. A stainless steel washer 1314 and a chromium snap ring 1316 are used to maintain the shaft termination assembly 1104 in place.

The terms "comprise" and "include", and any variations thereof required for grammatical reasons, are to be considered as interchangeable and accorded the widest possible interpretation.

It will be understood that the components shown in any of the drawings are not necessarily drawn to scale, and, like parts shown in several drawings are designated the same reference numerals.

The invention is not limited to the embodiments hereinbefore described which may be varied in both construction and detail.

## Claims

1. An aerator comprising a main body casing (204), a motor (206), an aerator shaft (208), a diffuser assembly (213), and an impeller (212) connected to the aerator shaft (208), whereby
the main body casing (204) forms a substantially vertical channel and comprises one or more upper openings (402) and a lower open end,
the diffuser assembly (213) is located within the vertical channel,
the impeller (212) is mounted beneath the diffuser assembly (213),
the motor (206) is configured to rotate the aerator shaft (208) and the impeller (212) to draw a downward draught through the vertical channel in the main body casing (204), so that air drawn through the aerator by the downward draught is passed through the diffuser assembly (213) to form elongated bubbles having a relatively low pressure due to cavitation, and the impeller (212) is configured to cut the elongated bubbles into micro-bubbles, and to discharge the micro-bubbles through the lower open end of the main body casing (204), **characterised in that**
the diffuser assembly (213) comprises a diffuser material (213) arranged above a diffuser support plate (214), and the diffuser material (213) has a porosity in the range of 150 to 300 microns.

2. An aerator as claimed in claim 1 **characterised in that** the aerator comprises a floatation device securing plate (202) configured to secure the aerator to a floatation device for deployment on a surface of a body of water, such that the motor (206) of the aerator is maintained in a position above the surface of the water, and at least a portion of the main body casing (204), including the open end of the main body casing (204), is submerged in the body of water.

3. An aerator as claimed in claim 1 or 2 **characterised in that** draught holes (806) in the diffuser support plate (214) are configured to form a downward draught, to draw a circular vortex of air through the diffuser material (213) so that an elongated bubble is created.

4. An aerator as claimed in any preceding claim **characterised in that** the motor (206) comprises a motor shaft (502) depending downwardly from the motor (206) into the main body casing (204) of the aerator; and the aerator shaft (208) comprises a bull-nosed upper free end (602) in frictional abutment with a lower free end (501) of the motor shaft (502) such that on rotation of the motor shaft (502) the aerator shaft (208) rotates.

5. An aerator as claimed in claim 4 **characterised in that** the bull-nosed upper free end (602) of the aerator shaft (208) and/or the lower free end (501) of the motor shaft (502) are rubberised to increase the frictional grip between the bull-nosed upper free end (602) of the aerator shaft (208) and the lower free end (510) of the motor shaft (502).

6. An aerator as claimed in any preceding claim **characterised in that** bearings for the aerator shaft (208) comprise tungsten carbide.

## Patentansprüche

1. Belüfter mit einem Gehäusemantelrohr (204), einem Motor (206), einer Belüfterwelle (208), einer Diffusoranordnung (213) und einem mit der Belüfterwelle (208) verbundenen Flügelrad (212), wobei
das Gehäusemantelrohr (204) einen im Wesentlichen vertikalen Kanal bildet und eine oder mehrere obere Öffnungen (402) und ein unteres offenes Ende aufweist,
die Diffusoranordnung (213) sich innerhalb des vertikalen Kanals befindet,
das Flügelrad (212) unterhalb der Diffusoranordnung (213) angebracht ist,
der Motor (206) dazu eingerichtet ist, die Belüfterwelle (208) und das Flügelrad (212) zu drehen, um einen abwärts gerichteten Strom durch den vertikalen Kanal in dem Gehäusemantelrohr (204) zu ziehen, so dass von dem abwärts gerichteten Strom durch den Belüfter gezogene Luft durch die Diffusoranordnung (213) geleitet wird, um längliche Blasen mit einem aufgrund von Kavitation relativ geringen Druck zu bilden, und das Flügelrad (212) dazu eingerichtet ist, die länglichen Blasen in Mikroblasen zu zerteilen und die Mikroblasen durch das untere offene Ende des Gehäusemantelrohrs (204) auszustoßen, **dadurch gekennzeichnet, dass**
die Diffusoranordnung (213) ein Diffusormaterial (213) umfasst, das oberhalb einer Diffusorhalteplatte (214) angeordnet ist, und dass das Diffusormaterial (213) eine Porosität im Bereich von 150 bis 300 Mikrometer hat.

2. Belüfter nach Anspruch 1, **dadurch gekennzeichnet,**
**dass** der Belüfter eine Flotationseinrichtungsbefestigungsplatte (202) aufweist, die dazu eingerichtet ist, den Belüfter einer Flotationseinrichtung zum Einsatz auf einer Oberfläche einer Wassermasse zu befestigen, so dass der Motor (206) des Belüfters in einer Lage oberhalb der Wasseroberfläche gehalten wird und zumindest ein Teil des Gehäusemantelrohrs (204) einschließlich des offenen Endes des Gehäusemantelrohrs (204) in die Wassermasse eingetaucht ist.

3. Belüfter nach Anspruch 1 oder 2,
**dadurch gekennzeichnet, dass** Durchströmungsöffnungen (806) in der Diffusorhalteplatte (214) dazu konfiguriert sind, einen abwärts gerichteten Strom zum Ziehen eines kreisförmigen Luftwirbels durch das Diffusormaterial (213) auszubilden, so dass eine längliche Blase erzeugt wird.

4. Belüfter nach einem der vorhergehenden Ansprüche,
**dadurch gekennzeichnet, dass** der Motor (206) eine Motorwelle (502) aufweist, die aus dem Motor (206) nach unten in das Gehäusemantelrohr (204) des Belüfters herabhängt, und die Belüfterwelle (208) ein stiernasiges, oberes freies Ende (602) in reibschlüssiger Anlage mit einem unteren freien Ende (501) der Motorwelle (502) aufweist, so dass bei einer Drehung der Motorwelle (502) die Belüfterwelle (208) rotiert.

5. Belüfter nach Anspruch 4,
**dadurch gekennzeichnet, dass** das stiernasige, obere freie Ende (602) der Belüfterwelle (208) und/oder das untere freie Ende (501) der Motorwelle (502) gummiert sind, um den Reibeingriff zwischen dem stiernasigen, oberen freien Ende (602) der Belüfterwelle (208) und dem unteren freien Ende (501) der Motorwelle (502) zu verstärken.

6. Belüfter nach einem der vorhergehenden Ansprüche,
**dadurch gekennzeichnet, dass** Lager für die Belüfterwelle (208) Wolframcarbid umfassen.

## Revendications

1. Aérateur comprenant un boîtier de corps principal (204), un moteur (206), un arbre d'aérateur (208), un ensemble de diffuseur (213) et un impulseur (212) raccordé à l'arbre d'aérateur (208), moyennant quoi :
le boîtier de corps principal (204) forme un canal sensiblement vertical et comprend une ou plusieurs ouvertures supérieures (402) et une extrémité ouverte inférieure,
l'ensemble de diffuseur (213) est positionné à l'intérieur du canal vertical,
l'impulseur (212) est monté au-dessous de l'ensemble de diffuseur (213),
le moteur (206) est configuré pour faire tourner l'arbre d'aérateur (208) et l'impulseur (212) pour aspirer un tirage descendant à travers le canal vertical dans le boîtier de corps principal (204), de sorte que l'air aspiré à travers l'aérateur par le tirage descendant passe par l'ensemble de diffuseur (213) pour former des bulles allongées ayant une pression relativement faible en raison de la cavitation, et l'impulseur (212) est configuré pour couper les bulles allongées en microbulles, et pour décharger les microbulles à travers l'extrémité ouverte inférieure du boîtier de corps principal (204), **caractérisé en ce que** :
l'ensemble de diffuseur (213) comprend un matériau de diffuseur (213) agencé au-dessus d'une plaque de support de diffuseur (214) et le matériau de diffuseur (213) a une porosité dans la plage de 150 à 300 microns.

2. Aérateur selon la revendication 1, **caractérisé en ce que** l'aérateur comprend une plaque de fixation de dispositif de flottaison (202) configurée pour fixer l'aérateur sur un dispositif de flottaison pour le déploiement sur une surface d'un corps d'eau, de sorte que le moteur (206) de l'aérateur est maintenu dans une position au-dessus de la surface de l'eau, et au moins une partie du boîtier de corps principal (204), comprenant l'extrémité ouverte du boîtier de corps principal (204), est immergée dans le corps d'eau.

3. Aérateur selon la revendication 1 ou 2, **caractérisé en ce que** les trous de tirage (806) dans la plaque de support de diffuseur (214) sont configurés pour former un tirage descendant pour aspirer un tourbillon circulaire d'air à travers le matériau de diffuseur (213) de sorte qu'une bulle allongée est créée.

4. Aérateur selon l'une quelconque des revendications précédentes, **caractérisé en ce que** le moteur (206) comprend un arbre de moteur (502) dépendant vers le bas à partir du moteur (206) dans le boîtier de corps principal (204) de l'aérateur ; et l'arbre d'aérateur (208) comprend une extrémité libre supérieure arrondie (602) en butée par friction avec une extrémité libre inférieure (501) de l'arbre de moteur (502) de sorte que suite à la rotation de l'arbre de moteur (502), l'arbre d'aérateur (208) tourne.

5. Aérateur selon la revendication 4, **caractérisé en ce que** l'extrémité libre supérieure arrondie (602) de l'arbre d'aérateur (208) et/ou l'extrémité libre inférieure (501) de l'arbre de moteur (502) sont caoutchoutées pour augmenter la prise par friction entre l'extrémité libre supérieure arrondie (602) de l'arbre d'aérateur (208) et l'extrémité libre inférieure (510) de l'arbre de moteur (502).

6. Aérateur selon l'une quelconque des revendications précédentes, **caractérisé en ce que** les paliers pour l'arbre d'aérateur (208) comprennent du carbure de tungstène.
